# EUROPEAN PATENT APPLICATION

(11) **EP 2 484 198 A1**
(43) Date of publication of application: **08.08.2012**
(21) Application number: 11008297.1
(22) Date of filing: 14.10.2011
(51) Int. Cl.: A01G 9/02

(54) **Drain pillow**

(30) Priority: 15.10.2010 DK 201000193
(71) Applicant: TiLa Aps, 7400 Herning (DK)
(72) Inventor: TiLa Aps, 7400 Herning (DK)

(57) **Abstract**

The invention relates to a drain pillow (1) for flowerpots, plant crocks, etc., comprising a container made at least partly from a weed control fabric (2) or similar water permeable fabric or geotextile, said container comprising a filling of drain material (4).

## Description

### Field of the invention

The present invention relates in general to drainage of confined spaces filled with relatively loose material. In particular the invention provides an advantageous solution for the drainage of e.g. flowerpots filled with loose soil, etc.

### Background of the invention

In relation to gardening and in particular when planting or repotting plants in flowerpots, it is common practice to add a drain layer in the bottom of the flowerpot, before building up with soil, etc. Usually, drain layers are made by filling the bottom few centimetres of the pot with pebbles, rocks, potsherds, etc.

The purpose of the drain layer is to avoid over watering by allowing excess water to be collected in the drain layer, and to avoid increasing soil acidity. Important elements in obtaining a successful flowerpot culture are drainage and good air circulation in the root zone, thereby avoiding the roots to be continuously covered by still water, not being able to breath, with rot or limited growth as a common result.

The functioning of the drain layer is facilitated by providing drain holes in the bottom of the flowerpot, thereby ensuring the escape of water collected in the drain layer.

While the common practice outlined above works well in principle, it does, however, have some disadvantages. Often loose soil, sand grains, or other fine particles of the flowerpot contents will slowly over time fill the cavities in the drain layer and thereby reduce the positive effects the drain layer has with regards to the thriving and growth of the plant, as well as causing the soil level in the flowerpot to drop. This problem is even further strengthened by over watering, thus constituting a downward spiral where the effect of the drain layer is reduced faster and faster under the very circumstances where it is supposed to prove its worth.

A further disadvantage of the usual drain layer practice is that repotting or simply reusing the drain layer material or soil is somewhat complicated as the drain layer material after a time has become mixed with the pot soil. The common result is that the drain layer material is simply discarded and new material is obtained for convenience, even though the used drain layer material would still work perfectly if rinsed or otherwise cleaned.

### Summary of the invention

The invention relates to a drain pillow 1 for flowerpots 5, plant crocks, etc., comprising a container made at least partly from a weed control fabric 2 or similar water permeable fabric or geotextile, said container comprising a filling of drain material 4.

By the present invention is solved the problem of drain material and soil getting mixed in flowerpots and the like over time, as the drain material is encapsulated. This is advantageous as it maintains the effects of the drain layer even in over watering situations, and it makes reuse of the drain material when repotting extremely easy as the entire drain system in form of a drain pillow according to the present invention can just be taken out from one pot and used in another without any need of sorting, rinsing or cleaning. Moreover, the encapsulation of drain material and the resulting non-mixing also avoids the soil level to drop because of the soil filling the cavities in the drain material, and the drain pillow further effectively avoid that soil is washed out of the flower pot through drain holes in the bottom of the pot, as the drain pillow seals the drain holes for soil but not for water.

According to the present invention the weed control fabric 2 or similar fabric comprises a water-permeable woven or non-woven, synthetic or natural fabric which allow for penetration of water and preferably also air, while being substantially non-permeable for soil particles and sand grains. A suitable kind of fabric material is e.g. the weed control fabrics that are normally used in flower beds for avoiding weed growth while still allowing for both water and nutrition to penetrate the fabric for the benefit of the desired vegetation, Other suitable weed control fabrics and other fabrics are e.g. the fabrics used beneath concrete tiles or the like to avoid weed from growing in the spaces between the ti les, or the geotextiles used for landscaping to avoid soil, sand etc. to move, e.g. a sand dune or a steep slope, while still allowing for water flow.

Any use of a drain pillow according to the present invention in confined spaces filled with loose material which needs drainage is within the scope of the present invention, e.g. flower pots, plant crocks, window flower boxes, elevated flower beds, sand boxes, terrariums, etc. Several drain pillows can easily be used together for bigger spaces, thus making use of a drain pillow of the present invention very flexible.

An advantageous embodiment of the present invention is obtained when said drain material 4 comprises expanded-clay aggregate pellets, e.g. Leca pellets, or polystyrene or plastic balls.

The use of expanded-clay aggregate products is very advantageous as it is a natural product, is very light which improves handling and transportation of the drain pillows as well as the flower pots with drain pillows, it is inexpensive to manufacture, and it is known for its great drainage properties. Further, the use of pellets or balls provides for a very flexible pillow regarding both shape and size.

An advantageous embodiment of the present invention is obtained when said drain material 4 comprises a fixed structure, e.g. a moulded or extruded plastic or polystyrene structure or a metal wire mesh. The use of a fixed structure allows for easy manufacture and fitting of drain pillows for specific size and shape, e.g. for integration into flower pots at manufacture time.

An advantageous embodiment of the present invention is obtained when said fixed structure is formed by several fixed structures of same or varying shape.

An advantageous embodiment of the present invention is obtained when said weed control fabric 2 or similar water permeable fabric or geotextile is substantially non-permeable for soil particles and sand grains.

An advantageous embodiment of the present invention is obtained when said weed control fabric 2 or similar water permeable fabric or geotextile comprises a woven or non-woven, synthetic or natural fabric.

An advantageous embodiment of the present invention is obtained when said weed control fabric 2 or similar water permeable fabric or geotextile comprises a thermoplastic polymer such as polypropylene or polyester.

An advantageous embodiment of the present invention is obtained when said container is formed from said weed control fabric 2 or similar water permeable fabric or geotextile by welding or heat sealing, sewing or gluing.

An advantageous embodiment of the present invention is obtained when said drain pillow 1 is made from two substantially round pieces of said weed control fabric 2 or similar water permeable fabric or geotextile.

An advantageous embodiment of the present invention is obtained when said drain pillow I is made from two substantially polygonal, e.g. rectangular, pieces of said weed control fabric 2 or similar water permeable fabric or geotextile.

An advantageous embodiment of the present invention is obtained when said drain pillow 1 is shaped like a box, cone, pyramid or a frustum thereof.

By providing a box, cone or pyramid shape, or frustums thereof, which matches the shape of the flower pot, the soil retaining effect of the drain pillow is increased as the possibility of soil getting past the drain pillow at the edges is very limited compared to the more pillow-shaped drain pillow of the present invention.

An advantageous embodiment of the present invention is obtained when said drain pillow 1 is integrated in a flowerpot 5.

Handling of the drain layer when planting or repotting can be entirely avoided by providing flowerpot with integrated drain layer in the form of an integrated drain pillow according to the present invention.

The present invention further relates to a flowerpot or similar planting container integrally comprising a drain pillow according to any of the above.

### The drawings

The invention will in the following be described with reference to the drawings where
fig. 1 illustrates an embodiment of a drain pillow according to the present invention,
fig. 2 illustrates a section of' an embodiment of the present invention, and
fig. 3 illustrates a flower pot comprising a drain pillow according to the present invention.

### Detailed description

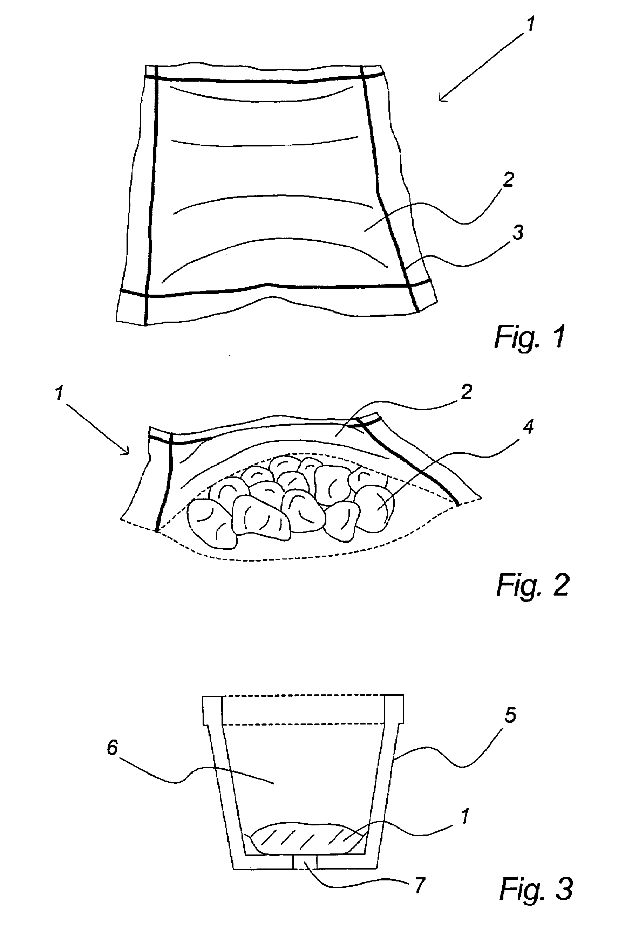

The embodiment of a drain pillow 1 according to the present invention as shown in fig. 1 comprises a container made from weed control fabric 2 or other water-permeable woven or non-woven, synthetic or natural fabric which allow for penetration of water and preferably also air, while being substantially non-permeable for soil particles and sand grains. A suitable kind of fabric material is e.g. the weed control fabrics that are normally used in flower beds for avoiding weed growth while still allowing for both water and nutrition to penetrate the fabric for the benefit of the desired vegetation. Other suitable weed control fabrics and other fabrics are e.g. the fabrics used beneath concrete liles or the like to avoid weed from growing in the spaces between the tiles, or the geotextiles used for landscaping to avoid soil, sand etc. to move, e.g. a sand dune or a steep slope, while still allowing for water flow.

The drain pillow 1 in the embodiment of fig. 1 is kept together by seals 3 made by welding or hot scaling, which is e.g. possible for drain pillows made from thermoplastic materials such as polypropylene or polyester as many weed control fabrics are made from. Other fastening means are within the scope of the present invention, e.g. sewing, gluing, mechanical fastening, etc.

The drain pillow in fig. 1 is made from two rectangular sheets of weed control fabric. However, any shape or configuration is within the scope of the present invention, such as e.g. round, triangular, pentagonal, etc.. or boxes, cones, pyramids, or frustums thereof.

Fig. 2 illustrates by a section of a drain pillow according to an embodiment of the present invention the drain material 4 inside the drain pillow container. In a preferred embodiment the drain material comprises expanded-clay aggregate pellets such as e.g. Leca pellets, but any suitable drain material is within the scope of the present invention. The clay pellets or other, preferably light, pellets or balls, e.g. polystyrene or plastic balls, provides for a louse structure of the drain pillow, specifically if the container is not stuffed full with drain material. A loose structure is advantageous as its shape can easily be manipulated as needed, and one size of drain pillow may fit several pot sizes, and e.g. a rectangular drain pillow may fit in around flowerpot.

In an alternative embodiment of the present invention, the drain material 4 comprises a fixed structure e.g. a moulded or extruded plastic structure, e.g. a honeycomb structure, or a metal wire mesh, preferably comprising mostly cavities held together by as little structure as possible for optimum permeability, water storage volume and low weight. The fixed structure may be comprised by several smaller fixed structures of similar or varying shape. An embodiment with a fixed structure drain material may easily be manufactured with shape and size to match a specific flower pot or other planting container. A further alternative embodiment comprises manufacturing flower pots with integral drain pillow, either moulded into e.g. a plastic flower pot or mechanically or otherwise fixed to flower pots or other planting containers.

Fig. 3 illustrates a section of a flowerpot 5 having a drain pillow 1 according to an embodiment of the invention placed in the bottom. The flowerpot 5 further comprises planting space 6 for filling with soil and plant roots, as well as a drain hole 7 for allowing excess water to escape. It can be imagined from fig. 3 how the drain pillow I avoids the drain hole 7 from getting plugged by soil and dirt, as well as avoiding that the drain material becomes mixed with the soil.

## Claims

1. Drain pillow (1) for flowt.:rpots (5), plant crocks, etc., comprising a container made at least partly from a weed control fabric (2) or similar water permeable fabric or geotextile, said container comprising a filling of drain material (4).

2. Drain pillow according to claim 1, wherein said drain material (4) comprises expanded-clay aggregate pellets, e.g. Leca pellets, or polystyrene or plastic balls.

3. Drain pillow according to claim 1, wherein said drain material (4) comprises a fixed structure, e.g. a moulded or extruded plastic, polystyrene or a metal wire mesh.

4. Drain pillow according to claim 3, wherein said fixed structure is formed by several fixed structures of same or varying shape.

5. Drain pillow according to any of the claims 1 to 4, wherein said weed control fabric (2) or similar water permeable fabric or geotextile is substantially non-permeable for soil particles and sand grains.

6. Drain pillow according to any of the claims 1 to 5, wherein said weed control fabric (2) or similar water permeable fabric or geotextile comprises a woven or non-woven, synthetic or natura: fabric.

7. Drain pillow according to any of the claims 1 to 6. wherein said weed control fabric (2) or similar water permeable fabric or geotextile comprises a thermoplastic polymer such as polypropylene or polyester.

8. Drain pillow according to any of the claims : to 7, wherein said container is formed from said weed control fabric (2) or similar water permeable fabric or geotextile by welding or heat sealing, sewing or gluing.

9. Drain pillow according to any of the claims I to 8, wherein said drain pillow (1) is made from two substantially round pieces of said weed control fabric (2) or similar water permeable fabric or geotextile.

10. Drain pillow according to any of the claims 1 to 8, wherein said drain pillow (1) is made from two substantially polygonal, e.g. rectangular, pieces of said weed control fabric (2) or similar water permeable fabric or geotextile.

11. Drain pillow according to any of the claims 1 to 8, wherein said drain pillow (1) is shaped like a box, cone, pyramid or a frustum thereof.

12. Drain pillow according to any of the claims I to 11, wherein said drain pillow (1) is integrated in a flowerpot (5).

13. Flowerpot (5) or similar planting container integrally comprising a drain pillow (1) according to any of the claims 1 to 12.
